# EUROPÄISCHE PATENTSCHRIFT

(11) **EP 1 519 879 B1**
(45) Veröffentlichungstag und Bekanntmachung des Hinweises auf die Patenterteilung: **02.11.2005**
(21) Anmeldenummer: 03762562.1
(22) Anmeldetag: 30.06.2003
(51) Int. Cl.: B65D 5/74

(54) **DECKEL FÜR GETRÄNKEKARTONVERBUNDPACKUNGEN SOWIE WERKZEUGE UND VERFAHREN ZUR HERSTELLUNG EINES SOLCHEN DECKELS SOWIE DAMIT VERSEHENE GETRÄNKEKARTONVERBUNDPACKUNGEN**
COVER FOR CARDBOARD COMPOSITE BEVERAGE PACKAGES, TOOLS AND METHODS FOR PRODUCING SUCH A COVER, AND CARDBOARD COMPOSITE BEVERAGE PACKAGES PROVIDED THEREWITH
COUVERCLE DESTINE A DES EMBALLAGES COMPOSITES A BASE DE CARTON POUR BOISSONS, PROCEDE DE PRODUCTION D'UN TEL COUVERCLE ET EMBALLAGES COMPOSITES A BASE DE CARTON POUR BOISSONS EQUIPES D'UN TEL COUVERCLE

(30) Priorität: 03.07.2002 DE 10230001
(43) Veröffentlichungstag der Anmeldung: 06.04.2005
(73) Patentinhaber: SIG Technology Ltd., 8212 Neuhausen am Rheinfall (CH)
(72) Erfinder: DAMMERS, Matthias, 52477 Alsdorf (DE)
(74) Vertreter: Thielmann, Andreas
(86) Internationale Anmeldenummer: PCT/EP2003/006944
(87) Internationale Veröffentlichungsnummer: WO 2004/005148

(56) Entgegenhaltungen:
- EP-A- 0 505 851
- US-A- 1 450 260
- US-A- 2 064 739
- US-A- 5 804 129

## Beschreibung

Die Erfindung betrifft einen Deckel für Getränkekartonverbundpackungen, wobei die Getränkekartonverbundpackungen aus einem Deckel aus Kunststoff und einem Packungskörper bestehen, wobei der Deckel ein mit einem Gewinde versehenes Ausgießelement aufweist und wobei der Deckel tiefgezogen ist. Weiterhin betrifft die Erfindung Werkzeuge zum Tiefziehen eines solchen Deckels, entsprechende Verfahren zu seiner Herstellung und eine mit einem solchen Deckel versehene Getränkekartonverbundpackung.

Getränkekartonverbundpackungen sind in vielerlei Ausführungen seit langem bekannt. Neben den komplett aus einem Karton/Kunststoff-Verbund bestehenden Packungen gibt es auch Packungen aus einem Deckel aus Kunststoff und einem Packungskörper aus Karton/Kunststoff-Verbundmaterial und solche, welche aus einem von einem Hohlkörper gebildeten Mantel und jeweils einem zugehörigen, vorzugsweise aus Kunststoff bestehenden Boden und Deckel bestehen, wobei sowohl die Formgebung der Packung als auch deren Stabilität im Regelfall durch die Geometrie von Boden und Deckel bestimmt wird. Es ist schnell ersichtlich, dass insbesondere dann, wenn Boden und Deckel aus Kunststoff bestehen, der Packung nahezu beliebige Querschnittsformen verliehen werden können.

Darüber hinaus sind auch Getränkekartonverbundpackungen bekannt, welche mit Ausgießelementen versehen sind. Hierbei hat es sich in der Praxis durchgesetzt, dass solche Ausgießelemente wiederverschließbar ausgeführt sind. Dies kann beispielsweise durch einen aufklappbaren Deckel oder mittels einer aufschraubbaren Schraubkappe als Verschluss realisiert sein. Da die zuvor näher beschriebenen Ausgießelement in der Regel aus Kunststoff gefertigt sind, bietet es sich an, sowohl den Deckel als auch das darauf befindliche Ausgießelement einstückig aus Kunststoff herzustellen.

Ein Deckel für Getränkekartonverbundpackungen der eingangs genannten und zuvor näher beschriebenen Art ist aus der EP-A-0 505 851 bekannt. Die Herstellung dieses bekannten Deckels im Tiefziehverfahren ist jedoch nachteilig, da das Gewinde des Ausgießelementes unmittelbar in den im Tiefziehwerkzeug befindlichen Schraubdeckel hineinverformt wird. Zum Ermöglichen der Öffnung ist es bei diesem Stand der Technik notwendig, dass mit einem Siegeldorn der Deckel mit dem Ausgießelement im Bereich der späteren Öffnung versiegelt werden muss, um beim erstmaligen Öffnen durch Zerstörung des Kunststoffmaterials oberhalb des Ausgießelementes eine Gießöffnung zu erzeugen. Die hierfür bekannte Lösung ist nicht nur konstruktiv aufwendig, sondern bedarf, dass der Schraubdeckel wenigstens einen Entlüftungskanal aufweist, um den Tiefziehvorgang zu ermöglichen. Ein solcher Kanal ist jedoch unerwünscht, da während des Transports und der Lagerung von mit solchen Deckeln versehenen Packungen Staub oder gar Keime aufgenommen werden können, die beim Ausgießen mit dem Produkt in Verbindung treten können. Des weiteren ist es bei dem bekannten Deckel nicht möglich, eine damit versehene Getränkepackung durch die Ausgießöffnung des Ausgießelements zu befüllen. Dies ist jedoch immer dann erwünscht, wenn die Form der Getränkepackung es erfordert, dass die Deckel vor dem Füllvorgang mit der Verpackung verbunden werden müssen.

Der Erfindung liegt die Aufgabe zugrunde, einen konstruktiv einfach aufgebauten und damit kostengünstig herstellbaren Deckel mit einem einstückig angeformten Ausgießelement für Getränkekartonverbundpackungen zu schaffen, der auch ein Befüllen dieser Packungen durch das Ausgießelement gestattet, und ein entsprechendes Werkzeug sowie Verfahren zu dessen Herstellung bereitzustellen.

Hinsichtlich des Deckels wird die Aufgabe dadurch gelöst, dass das Ausgießelement eine Ausgießöffnung aufweist, die von einem Schraubdeckel verschlossen werden kann.

Ein erstes entsprechendes erfindungsgemäßes Werkzeug zeichnet sich dadurch aus, dass die Tiefziehform einen herausfahrbaren Gewindestutzen aufweist, welcher vor dem Tiefziehvorgang, vorzugsweise über einen Spindelantrieb, aus dem Werkzeugkörper in eine Arbeitsstellung verfahren und nach dem Tiefziehvorgang aus dem erstarrten Kunststoffdeckel herausgeschraubt wird.

Ein alternatives Werkzeug ist erfindungsgemäß dadurch gekennzeichnet, dass die Tiefziehform einen Tubus mit gewindeförmig angeordneten Ausnehmungen aufweist, und dass unterhalb des Tubus ein Spreizwerkzeug mit einer Mehrzahl, der Teilung des Spreizwerkzeuges entsprechenden und als Gewindegang ausgeführten Erhebungen angeordnet ist, welches in zusammengefahrenem Zustand in den Tubus hineingefahren und dort während des Tiefziehvorganges verspreizt wird, so dass die Erhebungen des Spreizwerkzeuges durch die Ausnehmungen des Tubus nach außen bewegt werden.

Das erstgenannte Werkzeug betreffende Herstellungsverfahren ist durch die folgenden Schritte gekennzeichnet:
- Zuführen einer plastifizierten Folie über eine einen aus dem Werkzeugkörper herausragenden Gewindestutzen aufweisende Tiefziehform,
- Tiefziehen der Folie,
- Entformen des tiefgezogenen Deckels nach Herausschrauben des Gewindestutzens aus dem Deckel durch Hineindrehen in die Werkzeugform und
- Ausstanzen von Deckel und Ausgießöffnung.

Das Herstellungsverfahren bezüglich des zweitgenannten Werkzeuges weist die folgenden Schritte auf:
- Zuführen einer plastifizierten Folie über eine einen Tubus und ein Spreizwerkzeug aufweisende Tiefziehform,
- Aufspreizen des Spreizwerkzeuges,
- Tiefziehen der Folie über die Gewindegänge des aufgespreizten Spreizwerkzeugs im Inneren des Tubus,
- Entformen des tiefgezogenen Deckels nach Zusammenfahren des die Gewindegänge formenden Spreizwerkzeugs und
- Ausstanzen von Deckel und Ausgießöffnung.

Die Erfindung hat erkannt, dass es möglich ist, auch tiefgezogene Deckel mit einem Schraub-Ausgießelement zu versehen, wenn die zugehörigen Werkzeuge entsprechend den vorgenannten Merkmalen ausgebildet sind.

Dabei liegt der "Witz" der Erfindung darin, dass es auch möglich ist, einen Kunststoffdeckel mit einstückig angeformtem Schraubstutzen im Tiefziehverfahren herzustellen, indem der im Inneren des Schraubstutzens befindliche Teil des Werkzeuges vor dem Entformen des tiefgezogenen Deckels ins Innere des Werkzeugkörpers zurückbewegt wird, um den Deckel auch im Bereich des Gewindes freizugeben.

Gemäß der ersten alternativen erfindungsgemäßen Lösung weist das Werkzeug einen Gewindestutzen auf, welcher mittels einer Spindel oder dergleichen aus dem Werkzeugkörper und wieder in diesen hineinbewegbar ist. Dabei ist es klar, dass die Steigung der Gewindespindel der Steigung des Gewindestutzens entsprechen muss. Die Erfindung hat erkannt, dass es ohne weiteres möglich ist, einen Deckel mit angeformtem Ausgießelement mit Schraubgewinde im Tiefziehverfahren herzustellen, wenn das Gewinde nicht nur als Außengewinde zur Aufnahme der Schraubkappe dient, sondern darüber hinaus auch als Innengewinde zum Herausfahren des Gewindestutzens vor dem Entfernen des tiefgezogenen Deckels.

Alternativ hat es sich gezeigt, dass es für ein sicheres Verschließen der Schraubkappe auf dem Ausgießelement nicht notwendig ist, dass dessen Gewindegänge durchgängig verlaufen. Wenn das Gewinde keinerlei Dichtfunktionen übernehmen muss, weil dies ausreichend gut in der Ebene der eigentlichen Ausgießöffnung realisiert werden kann, lassen sich die erfindungsgemäßen Deckel gemäß der zweiten erfindungsgemäßen Lösung auch im Tiefziehverfahren herstellen, bei der das Spreizwerkzeug ähnlich einem Bohrfutter in die Arbeitsstellung gebracht werden kann. Dazu kann das Ausgießelement ein Gewinde mit wenigstens einem Gewindegang aufweisen und besteht der wenigstens eine Gewindegang aus mehreren zueinander beabstandet angeordneten und miteinander fluchtenden Gewindegangabschnitten.

Bevorzugt wird als Kunststoff für den Deckel eine Tiefzieh-Monomerfolie oder Tiefzieh-Multilayerfolie verwendet. Die Verwendung einer Tiefzieh-Multilayerfolie ist besonders vorteilhaft, da hierbei eine Folie verwendet werden kann, welche Sauerstoff- und/oder Aromabarriereeigenschaften aufweisen kann. Auf diese Weise lassen sich die mit dem erfindungsgemäßen Deckel versehenen Getränkekartonverbundpackungen auch für empfindliche Produkte, welche beispielsweise zuverlässig vor Licht oder Sauerstoff geschützt werden müssen, verwenden.

Nach einer weiteren Lehre der Erfindung ist der Deckel mit einer umlaufenden, nach oben abgewinkelten Kante versehen, die eine dichte Verbindung mit dem Mantelmaterial ermöglicht. Es ist jedoch auch möglich, einen Deckel mit einer nach unten abgewinkelten Kante mit dem erfindungsgemäßen Werkzeug bzw. Verfahren herzustellen. Dazu kann die Tiefziehform eine entsprechende umlaufende Nut aufweisen, in die das plastifizierte Kunststoffmaterial zunächst hineingezogen wird, und wobei der Deckel dann entlang der inneren Kante ausgestanzt wird.

Schließlich ist es auch möglich, einen Deckel mit einer nach oben abgewinkelten Kante mit einem konzentrisch beabstandeten Kragen mit geringem Abstand nach außen und wieder nach unten verlaufendem Rand vorzusehen, bei der die Breite des so entstandenen Schlitzes im wesentlichen der Materialstärke des Karton/Kunststoff-Verbundmaterials entspricht. Ein solcher Deckel lässt sich nach dem Füllen der Packung über den oberen Packungsrand hinüberstülpen und anschließend mit diesem verpressen.

Aus hygienischen Gründen und darüber hinaus als Originalitätsverschluss sieht eine weitere Ausgestaltung der Erfindung vor, dass die Ausgießöffnung des Ausgießelementes vor dem Aufschrauben des Schraubverschlusses mit einer aufgesiegelten Folie verschlossen ist. Hierdurch wird dem Verbraucher zuverlässig signalisiert, dass der Packungsinhalt noch original verschlossen und damit vor unbefugter Manipulation geschützt abgefüllt ist. Alternativ ist es jedoch auch denkbar, dass die Schraubkappe auf das Ausgießelement flüssigkeitsdicht aufgeschraubt ist, bevor die auf dem Kopf stehende Packung durch den noch nicht geschlossenen Boden befüllt wird.

Nur der Vollständigkeit halber sei erwähnt, dass die aus dem Werkzeugkörper herausfahrenden Teile der Tiefziehform temperiert ausgeführt sein können, um ein schnelleres Abkühlen des Deckels nach dem Tiefziehvorgang zu ermöglichen.

Für den Fall der Tiefziehform mit Spreizwerkzeug sieht eine weitere Ausgestaltung der Erfindung vor, dass der Tubus und das Spreizwerkzeug des Tiefziehwerkzeuges leicht konisch ausgeführt sind. Eine leichte Konizität des Spreizwerkzeuges erleichtert das Herausfahren aus dem Tubus der Tiefziehform, ist jedoch im Rahmen der Erfindung nicht zwingend notwendig. Bevorzugt besteht das Spreizwerkzeug aus drei Spreizelementen, deren Erhebungen zur Bildung des späteren Gewindeganges entsprechend aufeinander abgestimmt sind.

In weiterer Ausgestaltung der Erfindung ist es auch möglich, dass das Zuführen der plastifizierten Folie über die Tiefziehform und das Aufspreizen des Spreizwerkzeuges im Inneren des Tubus gleichzeitig erfolgen.

Darüber hinaus kann bei beiden Werkzeugen bzw. Herstellungsverfahren nach dem eigentlichen Tiefziehvorgang gemäß einer weiteren Lehre der Erfindung das Entformen des tiefgezogenen Deckels und das Ausstanzen von Deckel und Ausgießöffnung gleichzeitig erfolgen. Dazu kann wenigstens ein Messer im Inneren des Werkzeuges vorgesehen sein.

Schließlich betrifft die Erfindung auch eine mit einem erfindungsgemäßen Deckel versehene Getränkekartonverbundpackung. Dabei kann der Packungskörper aus Karton/Kunststoff-Verbundmaterial oder aus Karton/Kunststoff/Al-Verbundmaterial bestehen. Auch ist es möglich, dass der Packungskörper aus einem Mantel aus Karton/Kunststoff-Verbundmaterial bzw. Karton/Kunststoff/Al-Verbundmaterial und einem Boden, vorzugsweise aus Kunststoff, besteht.

Die Erfindung ist nachfolgend anhand einer lediglich bevorzugte Ausführungsbeispiele darstellenden Zeichnung näher erläutert. In der Zeichnung zeigen
- Fig. 1: ein erstes Ausführungsbeispiel eines erfindungsgemäßen Deckels ohne Schraubdeckel in perspektivischer Ansicht,
- Fig. 2: ein zweites Ausführungsbeispiel eines erfindungsgemäßen Deckels mit abgenommenem Schraubdeckel in perspektivischer Ansicht,
- Fig. 3: schematisch, ein erstes Ausführungsbeispiel eines erfindungsgemäßen Werkzeuges zum Tiefziehen eines erfindungsgemäßen Deckels im Querschnitt,
- Fig. 4: schematisch, ein zweites Ausführungsbeispiel eines erfindungsgemäßen Werkzeuges zum Tiefziehen eines erfindungsgemäßen Deckels im Querschnitt,
- Fig. 5: das Werkzeug aus Fig. 4 im Vertikalschnitt durch den Tubus,
- Fig. 6: das Spreizwerkzeug aus Fig. 5 in perspektivischer Darstellung,
- Fig. 7: den oberen Teil einer mit einem erfindungsgemäßen Deckel versehenen Getränkekartonverbundpackung in Transportstellung und perspektivischer Ansicht und
- Fig. 8: den oberen Teil einer mit einem erfindungsgemäßen Deckel versehenen Getränkekartonverbundpackung in Gießstellung und perspektivischer Ansicht.

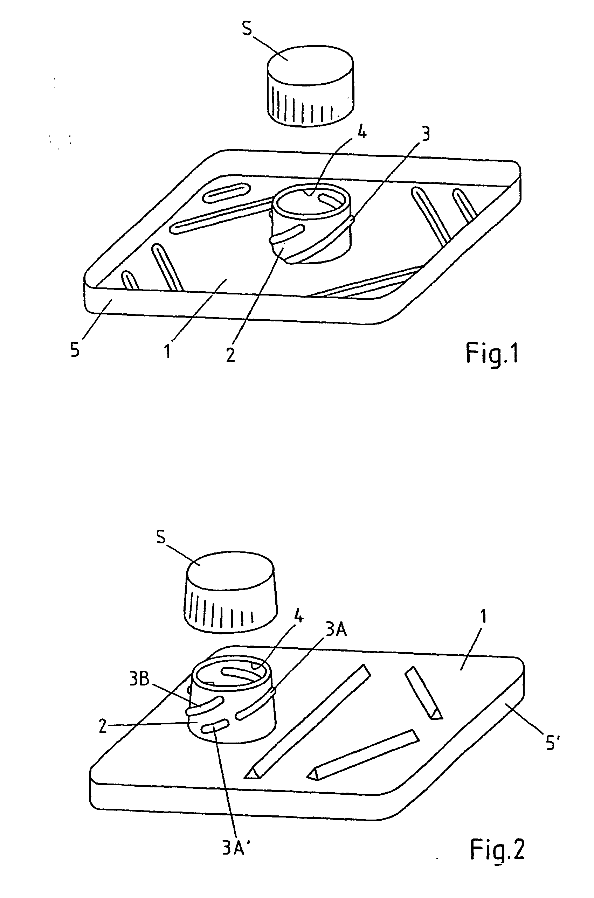

Fig. 1 und 2 zeigen jeweils einen erfindungsgemäßen Deckel 1 für Getränkekartonverbundpackungen, welcher ein im dargestellten Ausführungsbeispiel mittig (Fig. 1) bzw. seitlich (Fig. 2) angeordnetes Ausgießelement 2 aufweist, welches mit einem Gewinde 3 versehen ist und eine Ausgießöffnung 4 zum Entleeren des Packungsinhaltes aufweist. Während das Gewinde 3 in Fig. 1 durchgehende Gewindegänge aufweist, besteht das Gewinde in Fig. 2 aus mehreren zueinander beabstandet angeordneten und miteinander fluchtenden Gewindegangabschnitten 3A, 3B, 3A'. Eine umlaufende, nach oben abgewinkelte Kante 5 dient zur dichten Verbindung des Deckels 1 mit einem nicht dargestellten Packungsmantel. In Fig. 2 ist eine entsprechende, jedoch nach unten abgewinkelte Kante 5' dargestellt.

Den Fig. 1 und 2 ist weiterhin zu entnehmen, dass der Deckel nicht näher bezeichnete Erhebungen oder Rippen aufweisen kann, welche einerseits vorgesehen sein können, um die Stabilität des Deckels zu erhöhen und andererseits, um den Deckel mit ästhetischen (beispielsweise erhabene Schriftzüge, Logos oder dergleichen) oder funktionellen (beispielsweise Versteifungen oder Elemente zur besseren Stapelbarkeit) Gestaltungselementen zu versehen.

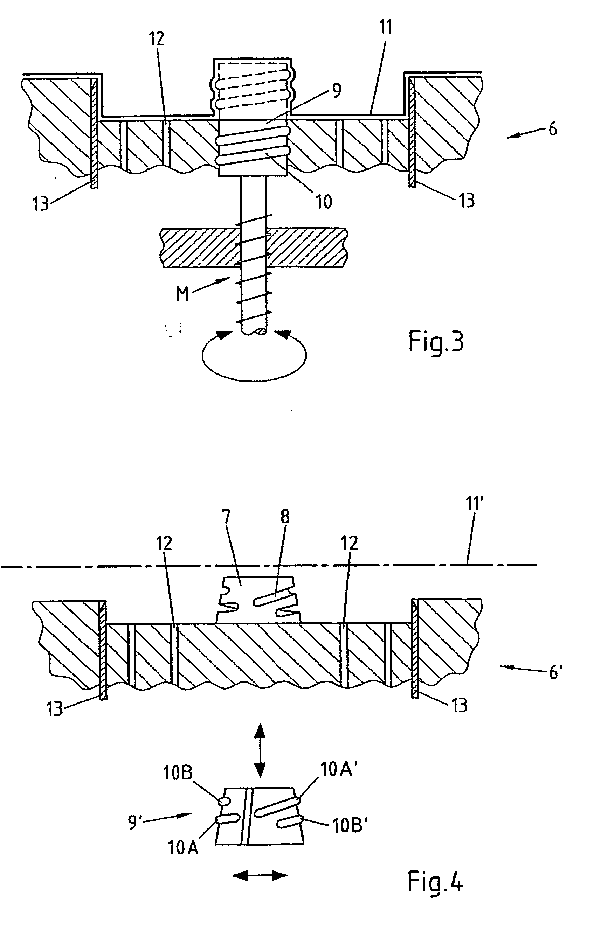

Bei einem ersten erfindungsgemäßen Werkzeug gemäß Fig. 3 weist eine Tiefziehform 6 einen Gewindestutzen 9 auf, welcher sich in Ruhestellung im Inneren der Tiefziehform 6 befindet. Der Gewindestutzen 9 weist einen oder mehrere Gewindegänge 10 auf, die von einem entsprechenden Gewindegang des nicht näher bezeichneten Werkzeugkörpers aufgenommen werden. Vor dem Tiefziehvorgang wird der Gewindestutzen 9 über einen nur schematisch dargestellten Spindelantrieb M aus der Ruhestellung in die Arbeitsstellung verfahren, indem der Gewindestutzen 9 entlang seines Außengewindes 10 aus dem Werkzeugkörper herausgeschraubt wird. In Fig. 3 ist die Folie 11 nach dem Tiefziehvorgang im erstarrten Zustand gezeigt. Es ist schnell ersichtlich, dass nach Erkalten des Deckels 1 der Gewindestutzen 9 aus dem Deckel 1 heraus wieder in den Werkzeugkörper hineingeschraubt werden kann, damit ein problemloses Entformen des Deckels möglich ist.

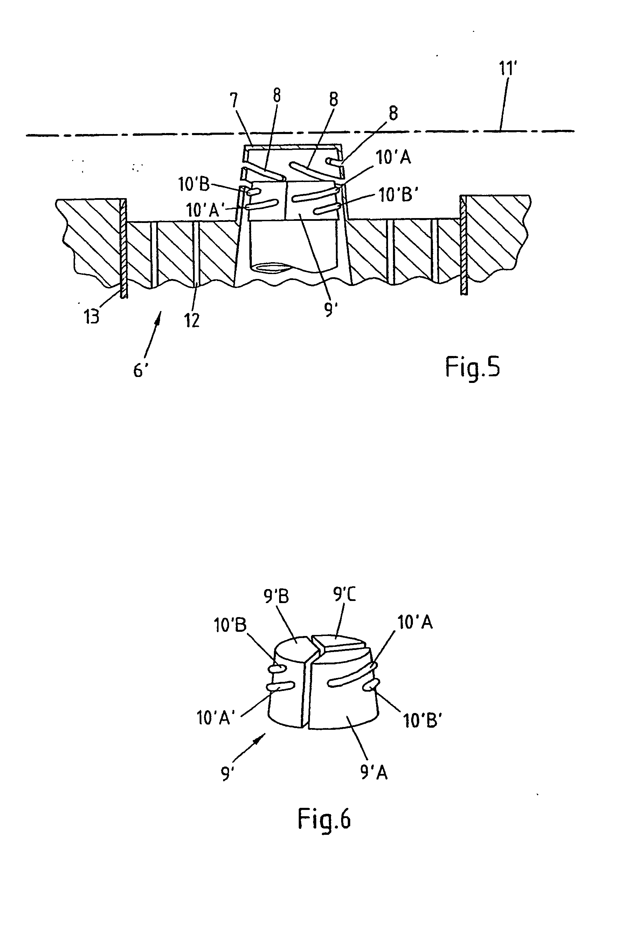

In Fig. 4 ist nun schematisch ein alternatives Werkzeug zur Herstellung des Deckels 1 im Tiefziehverfahren dargestellt. Die entsprechende Tiefziehform 6' weist einen Tubus 7 mit gewindeförmig angeordneten Ausnehmungen 8 auf, unter denen ein Spreizwerkzeug 9' angeordnet ist, welches im dargestellten und insoweit bevorzugten Ausführungsbeispiel mit drei Spreizelemente 9'A, 9'B und 9'C versehen ist, wie insbesondere auch aus der perspektivischen Darstellung in Fig. 6 hervorgeht. Die einzelnen Spreizelemente weisen entsprechende Erhebungen 10'A, 10'B, 10'A' und 10'B' auf, welche beim Tiefziehvorgang im Inneren des Tubus 7 durch Spreizen des Spreizwerkzeuges 9' durch die Ausnehmungen 8 des Tubus 7 nach außen bewegt werden. Auf diese Weise entsteht wenigstens ein Gewindegang mit mehreren zueinander beabstandet angeordneten und miteinander fluchtenden Gewindegangabschnitten 3A, 3A', 3B im Ausgießelement 2. Im bevorzugten Ausführungsbeispiel gemäß Fig. 4 sind sowohl der Tubus 7 als auch das Spreizwerkzeug 9 leicht konisch ausgeführt. Eine konische Form ist insbesondere bei kleinsten Ausgießerquerschnitten zweckmäßig, da hierdurch eine bessere Entformbarkeit gewährleistet wird, jedoch nicht zwingend notwendig.

In Fig. 5 ist nun schließlich das Werkzeug aus Fig. 4 im Bereich des Tubus 7 noch einmal detaillierter dargestellt. Man erkennt deutlich die Ausnehmungen 8 an der Rückseite des Tubus 7. Das Spreizwerkzeug 9' ist in Fig. 5 in nicht gespreiztem Zustand gezeigt, in diesem Zustand kann es in den Tubus 7 hinein und aus diesem heraus bewegt werden.

Der Herstellungsvorgang beim zweiten erfindungsgemäßen Werkzeug läuft folgendermaßen ab:

Von oben wird der Tiefziehform 6 eine plastifizierte Folienbahn 11', welche nur strichpunktiert angedeutet ist, zugeführt. Gleichzeitig wird das Spreizwerkzeug 9' axial in den Tubus 7 verfahren und dort aufgespreizt, so dass die Gewindegänge des nunmehr "fertigen" Tiefziehwerkzeuges erhaben vorstehen. Dabei ist die Tiefziehform 6' in bekannter Weise mit nur angedeuteten Saugbohrungen 12 versehen, welche gleichmäßig über die Fläche der Tiefziehform 6' verteilt angeordnet sind. Wie aus Fig. 2 hervorgeht, kann beim Tiefziehen gleichzeitig eine Kante durch entsprechende Formgebung der Tiefziehform 6 ausgebildet werden. Nach dem Tiefziehen fährt das Spreizwerkzeug 9' radial zusammen und wird axial aus dem Tubus 7 hinausbewegt. Bei beiden Verfahren müssen nur noch der Deckel 1 und die Ausgießöffnung 4 ausgestanzt werden. Dies kann in einem separaten Arbeitsschritt erfolgen, oder aber bereits im Tiefziehwerkzeug. Dazu kann die Tiefziehform 6 bzw. 6' entsprechende Messer 13 aufweisen, welche den tiefgezogenen Deckel aus der Folienbahn 11, 11' ausstanzen.

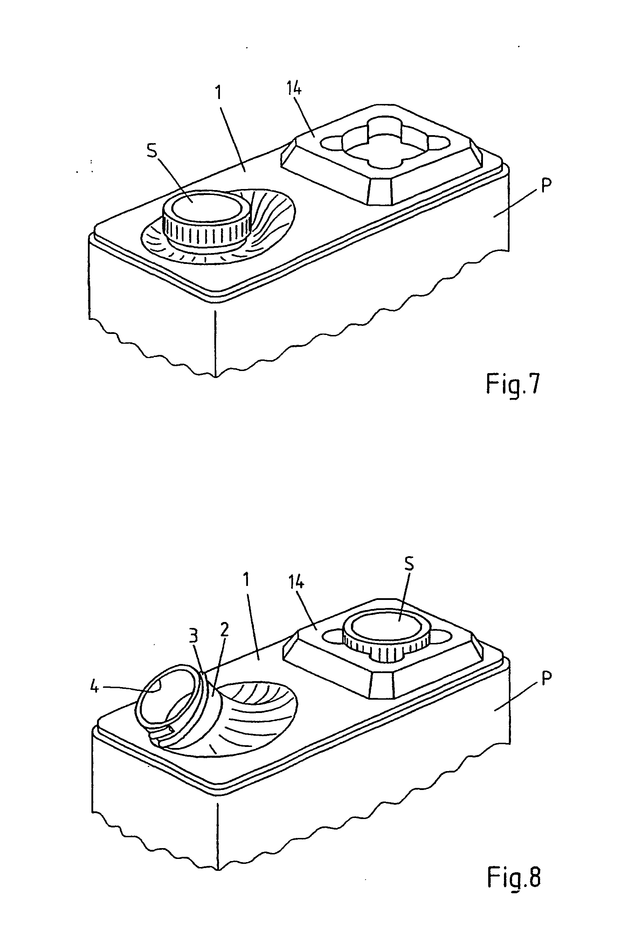

Schließlich ist in den Fig. 7 und 8 ein weiteres Ausführungsbeispiel eines erfindungsgemäßen Deckels 1 dargestellt. Dieser Deckel mit einer nicht mehr sichtbaren, nach unten abgewinkelten Kante ist in einer nur in ihrem oberen Bereich angedeuteten Getränkekartonverbundpackung P befestigt. Dabei ist in Fig. 7 die Transportstellung der Packung P und in Fig. 8 deren Gießstellung gezeigt. Man erkennt deutlich, dass der Deckel 1 um das Ausgießelement 2 herum membranartig ausgeführt ist, um zu erreichen, dass sich nach dem Abschrauben der Schraubkappe S das Ausgießelement 2 mit der Ebene seiner Ausgießöffnung 4 in Gießrichtung verschwenken lässt, um eine bessere Handhabung und damit auch Funktion beim Ausgießvorgang zu gewährleisten. Im dargestellten und insoweit bevorzugten Ausführungsbeispiel weist der Deckel 1 auf der dem Ausgießelement 2 gegenüberliegenden Seite eine Erhebung 14 auf, welche in ihrem Inneren eine Vertiefung aufweist, welche groß genug ist, die abgenommene Schraubkappe S, vorzugsweise klemmend, aufzunehmen. Diese Erhebung 14 hat jedoch auch Vorteile in der Transportstellung, wie in Fig. 7 ersichtlich, da sie eine gleichmäßige Stapelung mehrerer übereinander angeordneter Packungen P erlaubt, ohne dass das nur einseitig angeordnete und hervorstehende Ausgießelement 2 Probleme bereiten kann.

## Patentansprüche

1. Deckel für Getränkekartonverbundpackungen, wobei die Getränkekartonverbundpackungen aus einem Deckel (1) aus Kunststoff und einem Packungskörper (P) bestehen, wobei der Deckel (1) ein mit einem Gewinde (3) versehenes Ausgießelement (2) aufweist und wobei der Deckel (1) tiefgezogen ist,
**dadurch gekennzeichnet, dass** das Ausgießelement (2) eine Ausgießöffnung (4) aufweist, die von einem Schraubdeckel (S) verschlossen werden kann.

2. Deckel nach Anspruch 1,
**dadurch gekennzeichnet, dass** das Ausgießelement (2) ein Gewinde (3) mit wenigstens einem durchgehenden Gewindegang aufweist.

3. Deckel nach Anspruch 1,
**dadurch gekennzeichnet, dass** das Ausgießelement (2) ein Gewinde (3) mit wenigstens einem Gewindegang aufweist und dass der wenigstens eine Gewindegang aus mehreren zueinander beabstandet angeordneten und miteinander fluchtenden Gewindegangabschnitten (3A, 3B, 3A') besteht.

4. Deckel nach einem der Ansprüche 1 bis 3,
**dadurch gekennzeichnet, dass** als Kunststoff eine Tiefzieh-Monomerfolie verwendet wird.

5. Deckel nach einem der Ansprüche 1 bis 3,
**dadurch gekennzeichnet, dass** als Kunststoff eine Tiefzieh-Multilayerfolie verwendet wird.

6. Deckel nach Anspruch 5,
**dadurch gekennzeichnet, dass** die Multilayerfolie Sauerstoff- und/oder Aromabarriereeigenschaften aufweist.

7. Deckel nach einem der Ansprüche 1 bis 6,
**dadurch gekennzeichnet, dass** der Deckel (1) eine umlaufende nach oben abgewinkelte Kante (5) aufweist.

8. Deckel nach einem der Ansprüche 1 bis 6,
**dadurch gekennzeichnet, dass** der Deckel (1) eine umlaufende nach unten abgewinkelte Kante (5') aufweist.

9. Deckel nach einem der Ansprüche 1 bis 6,
**dadurch gekennzeichnet, dass** der Deckel eine umlaufende nach oben abgewinkelte Kante mit einem konzentrisch beabstandeten Kragen mit geringem Abstand nach außen und wieder nach unten auslaufendem Rand aufweist.

10. Deckel nach einem der Ansprüche 1 bis 9,
**dadurch gekennzeichnet, dass** die Ausgießöffnung (4) vor dem Aufschrauben des Schraubverschlusses mit einer aufgesiegelten Folie verschlossen ist.

11. Deckel nach einem der Ansprüche 1 bis 9,
**dadurch gekennzeichnet, dass** die Schraubkappe (S) auf das Ausgießelement (2) flüssigkeitsdicht aufgeschraubt ist.

12. Werkzeug zum Tiefziehen eines Deckels für Getränkekartonverbundpackungen nach einem der Ansprüche 1 bis 11 mit einer eine Mehrzahl von Saugbohrungen aufweisenden Tiefziehform,
**dadurch gekennzeichnet, dass** die Tiefziehform (6) einen herausfahrbaren Gewindestutzen (9) aufweist, welcher vor dem Tiefziehvorgang, vorzugsweise über einen Spindelantrieb (M), aus dem Werkzeugkörper in eine Arbeitsstellung verfahren und nach dem Tiefziehvorgang aus dem erstarrten Kunststoffdeckel herausgeschraubt wird.

13. Werkzeug zum Tiefziehen eines Deckels für Getränkekartonverbundpackungen nach einem der Ansprüche 1 bis 11 mit einer eine Mehrzahl von Saugbohrungen aufweisenden Tiefziehform,
**dadurch gekennzeichnet, dass** die Tiefziehform (6') einen Tubus (7) mit gewindeförmig angeordneten Ausnehmungen (8) aufweist, und dass unterhalb des Tubus (7) ein Spreizwerkzeug (9') mit einer Mehrzahl, der Teilung des Spreizwerkzeuges (9') entsprechenden und als Gewindegang ausgeführten Erhebungen (10'A, 10'B, 10'A', 10'B') angeordnet ist, welches in zusammengefahrenem Zustand in den Tubus (7) hineingefahren und dort während des Tiefziehvorganges verspreizt wird, so dass die Erhebungen (10'A, 10'B, 10'A', 10'B')des Spreizwerkzeuges (9') durch die Ausnehmungen (8) des Tubus (7) nach außen bewegt werden.

14. Werkzeug nach Anspruch 13,
**dadurch gekennzeichnet, dass** der Tubus (7) und das Spreizwerkzeug (9') eine leicht konische Form aufweisen.

15. Werkzeug nach Anspruch 13 oder 14,
**dadurch gekennzeichnet, dass** das Spreizwerkzeug (9') aus drei Spreizelementen (9A, 9B, 9C) besteht.

16. Werkzeug nach einem der Ansprüche 12 bis 15,
**dadurch gekennzeichnet, dass** im Werkzeug der Tiefziehform (6, 6') Messer (13) zum Ausstanzen des Deckels (1) und /oder der Ausgießöffnung (4) des Deckels (1) angeordnet sind.

17. Verfahren zur Herstellung eines Deckels für Getränkekartonverbundpackungen, wobei die Getränkekartonverbundpackungen aus einem Deckel aus Kunststoff und einem Packungskörper bestehen,
**gekennzeichnet durch** die folgenden Schritte:
- Zuführen einer plastifizierten Folie über eine einen aus dem Werkzeugkörper herausragenden Gewindestutzen aufweisende Tiefziehform,
- Tiefziehen der Folie,
- Entformen des tiefgezogenen Deckels nach Herausschrauben des Gewindestutzens aus dem Deckel **durch** Hineinschrauben in die Werkzeugform und
- Ausstanzen von Deckel und Ausgießöffnung.

18. Verfahren zur Herstellung eines Deckels für Getränkekartonverbundpackungen, wobei die Getränkekartonverbundpackungen aus einem Deckel aus Kunststoff und einem Packungskörper bestehen,
**gekennzeichnet durch** die folgenden Schritte:
- Zuführen einer plastifizierten Folie über eine einen Tubus und ein Spreizwerkzeug aufweisende Tiefziehform,
- Aufspreizen des Spreizwerkzeuges,
- Tiefziehen der Folie über die Gewindegänge des aufgespreizten Spreizwerkzeugs,
- Entformen des tiefgezogenen Deckels nach Zusammenfahren des die Gewindegänge formenden Spreizwerkzeugs und
- Ausstanzen von Deckel und Ausgießöffnung.

19. Verfahren nach Anspruch 17 oder 18,
**daurch gekennzeichnet, dass** das Zuführen der plastifizierten Folie über die Tiefziehform und das Aufspreizen des Spreizwerkzeuges im Inneren des Tubus gleichzeitig erfolgen.

20. Verfahren nach Anspruch 17 oder 18,
**daurch gekennzeichnet, dass** das Entformen des tiefgezogenen Deckels und das Ausstanzen von Deckel und Ausgießöffnung gleichzeitig erfolgen.

21. Getränkekartonverbundpackung, mit einem Deckel nach einem der Ansprüche 1 bis 10,
**daurch gekennzeichnet, dass** der Packungskörper aus Karton/Kunststoff-Verbundmaterial besteht.

22. Getränkekartonverbundpackung, mit einem Deckel nach einem der Ansprüche 1 bis 10,
**daurch gekennzeichnet, dass** der Packungskörper aus Karton/Kunststoff/Al-Verbundmaterial besteht.

23. Getränkekartonverbundpackung, mit einem Deckel nach einem der Ansprüche 1 bis 10,
**daurch gekennzeichnet, dass** der Packungskörper aus einem Mantel aus Karton/Kunststoff-Verbundmaterial und einem Boden, vorzugsweise aus Kunststoff besteht.

24. Getränkekartonverbundpackung, mit einem Deckel nach einem der Ansprüche 1 bis 10,
**daurch gekennzeichnet, dass** der Packungskörper aus einem Mantel aus Karton/Kunststoff/Al-Verbundmaterial und einem Boden, vorzugsweise aus Kunststoff besteht.

## Claims

1. A cover for cardboard composite beverage packages, wherein the cardboard composite beverage packages consist of a plastic cover (1) and a package body (P), wherein the cover (1) contains a pouring element (2) that is provided with a thread (3), and wherein the cover (1) is deep-drawn,
**characterized in that**
the pouring element (2) contains a pouring hole (4) that can be closed by means of a screw-on cap (S).

2. The cover according to Claim 1,
**characterized in that**
the pouring element (2) is provided with a thread (3) with at least one continuous flight.

3. The cover according to Claim 1,
**characterized in that**
the pouring element (2) is provided with a thread (3) with at least one flight, and **in that** the at least one flight consists of several aligned flight segments (3A, 3B, 3A') that are spaced apart from one another.

4. The cover according to one of Claims 1 to 3,
**characterized in that**
the plastic used is a monomeric deep-drawing sheet.

5. The cover according to one of Claims 1 to 3,
**characterized in that**
the plastic used is a multilayer deep-drawing sheet.

6. The cover according to Claim 5,
**characterized in that**
the multilayer sheet has oxygen barrier and/or aroma barrier properties.

7. The cover according to one of Claims 1 to 6,
**characterized in that**
the cover (1) contains an upwardly angled peripheral edge (5).

8. The cover according to one of Claims 1 to 6,
**characterized in that**
the cover (1) contains a downwardly angled peripheral edge (5').

9. The cover according to one of Claims 1 to 6,
**characterized in that**
the cover contains an upwardly angled peripheral edge with a concentric collar spaced apart therefrom, wherein the edge of said collar extends outward by a short distance and then downward again.

10. The cover according to one of Claims 1 to 9,
**characterized in that**
the pouring hole (4) is sealed with a foil before the screw-on cap is attached.

11. The cover according to one of Claims 1 to 9,
**characterized in that**
the screw-on cap (S) is screwed onto the pouring element (2) in a liquid-tight fashion.

12. A tool for deep-drawing a cover for cardboard composite beverage packages according to one of Claims 1 to 11, with a deep-drawing die that contains a plurality of suction bores,
**characterized in that**
the deep-drawing die (6) contains an extendable screw neck (9) that is displaced from the tool body into a working position before the deep-drawing process, preferably by means of a spindle drive (M), and screwed out of the solidified plastic cover after the deep-drawing process.

13. A tool for deep-drawing a cover for cardboard composite beverage packages according to one of Claims 1 to 11, with a deep-drawing die that contains a plurality of suction bores,
**characterized in that**
the deep-drawing die (6') comprises a tubular body (7) with recesses (8) that are arranged in the shape of a thread, and **in that** a spreading tool (9') arranged underneath the tubular body (7) contains a plurality of elevations (10'A, 10'B, 10'A', 10'B') that correspond to the pitch of the spreading tool (9') and are realized in the shape of a flight, wherein said spreading tool is inserted into the tubular body (7) in the contracted state and spread apart therein during the deep-drawing process such that the elevations (10'A, 10'B, 10'A', 10'B') of the spreading tool (9') are moved outward through the recesses (8) of the tubular body (7).

14. The tool according to Claim 13,
**characterized in that**
the tubular body (7) and the spreading tool (9') have a slightly conical shape.

15. The tool according to Claim 13 or 14,
**characterized in that**
the spreading tool (9') consists of three spreading elements (9A, 9B, 9C).

16. The tool according to one of Claims 12 to 15,
**characterized in that**
knives (13) for punching out the cover (1) and/or the pouring hole (4) of the cover (1) are arranged in the tool of the deep-drawing die (6, 6').

17. A method for manufacturing a cover for cardboard composite beverage packages, wherein the cardboard composite beverage packages consist of a plastic cover and a package body,
**characterized in that** the following steps are carried out:
- placing a plasticized sheet over a deep-drawing die with a screw neck that protrudes out of the tool body,
- deep-drawing the sheet,
- ejecting the deep-drawn cover after screwing the screw neck out of the cover and into the tool die, and
- punching out the cover and the pouring hole.

18. A method for manufacturing a cover for cardboard composite beverage packages, wherein the cardboard composite beverage packages consist of a plastic cover and a package body,
**characterized in that** the following steps are carried out:
- placing a plasticized sheet over a deep-drawing die with a tubular body and a spreading tool,
- spreading apart the spreading tool,
- deep-drawing the sheet over the flights of the spread-apart spreading tool,
- ejecting the deep-drawn cover after contracting the spreading tool that produces the flights, and
- punching out the cover and the pouring hole.

19. The method according to Claim 17 or 18,
**characterized in that**
the plasticized sheet is placed over the deep-drawing die at the same time the spreading tool is spread apart in the interior of the tubular body.

20. The method according to Claim 17 or 18,
**characterized in that**
the deep-drawn cover is ejected at the same time the cover and the pouring hole are punched out.

21. A cardboard composite beverage package with a cover according to one of Claims 1 to 10,
**characterized in that**
the package body consists of a cardboard/plastic composite.

22. The cardboard composite beverage package with a cover according to one of Claims 1 to 10,
**characterized in that**
the package material consists of a cardboard/plastic/Al composite.

23. The cardboard composite beverage package with a cover according to one of Claims 1 to 10,
**characterized in that**
the package body consists of a shell that is made of a cardboard/plastic composite and a bottom that is preferably made of plastic.

24. The cardboard composite beverage package with a cover according to one of Claims 1 to 10,
**characterized in that**
the package body consists of a shell that is made of a cardboard/plastic/Al composite and a bottom that is preferably made of plastic.

## Revendications

1. Couvercle destiné à des emballages composites à base de carton pour boissons, dans lequel :
- les emballages composites à base de carton pour boissons sont constitués d'un couvercle (1) en matière plastique et d'un corps d'emballage (P) ;
- le couvercle (1) présente un élément de versement (2) muni d'un filetage (3) ; et
- le couvercle (1) est embouti en profondeur,
**caractérisé en ce que** l'élément de versement (2) présente une ouverture de versement (4) qui peut être fermée par un couvercle à visser (S).

2. Couvercle selon la revendication 1, **caractérisé en ce que** l'élément de versement (2) présente un filetage (3) avec au moins un pas de vis continu.

3. Couvercle selon la revendication 1, **caractérisé en ce que** l'élément de versement (2) présente un filetage (3) avec au moins un pas de vis et **en ce que** ledit au moins un pas de vis est constitué de plusieurs tronçons de pas de vis (3A, 3B, 3A') agencés à distance les uns des autres et étant en alignement les uns avec les autres.

4. Couvercle selon l'une des revendications 1 à 3, **caractérisé en ce qu'**un film monomère d'emboutissage profond est utilisé comme matière plastique.

5. Couvercle selon l'une des revendications 1 à 3, **caractérisé en ce qu'**un film multicouche d'emboutissage profond est utilisé comme matière plastique.

6. Couvercle selon la revendication 5, **caractérisé en ce que** le film multicouche présente des propriétés faisant barrière à l'oxygène et/ou aux arômes.

7. Couvercle selon l'une des revendications 1 à 6, **caractérisé en ce que** le couvercle (1) présente une arête périphérique coudée vers le haut (5).

8. Couvercle selon l'une des revendications 1 à 6, **caractérisé en ce que** le couvercle (1) présente une arête périphérique coudée vers le bas (5').

9. Couvercle selon l'une des revendications 1 à 6, **caractérisé en ce que** le couvercle présente une arête périphérique coudée vers le haut comprenant un col à distance concentrique, avec une petite distance vers l'extérieur, et un bord s'étendant à nouveau vers le bas.

10. Couvercle selon l'une des revendications 1 à 9, **caractérisé en ce que** l'ouverture de versement (4) est fermée par un film scellé avant de visser la fermeture à visser.

11. Couvercle selon l'une des revendications 1 à 9, **caractérisé en ce que** le capuchon à visser (S) est vissé sur l'élément de versement (2) de manière étanche aux liquides.

12. Outil pour l'emboutissage profond d'un couvercle destiné à des emballages composites à base de carton pour boissons selon l'une des revendications 1 à 11, comprenant un moule d'emboutissage profond présentant une pluralité de perçages d'aspiration, **caractérisé en ce que** le moule d'emboutissage profond (6) présente une tubulure filetée extractible (9) qui est déplacée en dehors du corps d'outil jusque dans une position de travail, avant l'opération d'emboutissage profond, de préférence via un entraînement à broche (M), et qui est dévissée du couvercle en matière plastique solidifié après l'opération d'emboutissage profond.

13. Outil pour l'emboutissage profond d'un couvercle destiné à des emballages composites à base de carton pour boissons selon l'une des revendications 1 à 11, comprenant un moule d'emboutissage profond présentant une pluralité de perçages d'aspiration, **caractérisé en ce que** le moule d'emboutissage profond (6') présente un tube (7) avec des cavités (8), agencées à la manière d'un filetage, et **en ce qu'**un outil d'écartement (9'), comportant une pluralité de bossages (10'A, 10'B, 10'A', 10'B') qui correspondent à la division de l'outil d'écartement (9') et qui sont exécutés comme pas de vis, est agencé sous le tube (7), ledit outil d'écartement étant rentré dans le tube (7) dans l'état rétracté et y est écarté pendant l'opération d'emboutissage profond, de sorte que les bossages (10'A, 10'B, 10'A', 10'B') de l'outil d'écartement (9') peuvent être déplacés vers l'extérieur par les cavités (8) du tube (7).

14. Outil selon la revendication 13, **caractérisé en ce que** le tube (7) et l'outil d'écartement (9') présentent une forme légèrement conique.

15. Outil selon la revendication 13 ou 14, **caractérisé en ce que** l'outil d'écartement (9') est constitué de trois éléments d'écartement (9A, 9B, 9C).

16. Outil selon l'une des revendications 12 à 15, **caractérisé en ce que** des couteaux (13) sont agencés dans l'outil du moule d'emboutissage profond (6, 6') pour découper le couvercle (1) et/ou l'ouverture de versement (4) du couvercle (1).

17. Procédé pour fabriquer un couvercle destiné à des emballages composites à base de carton pour boissons, dans lequel les emballages composites à base de carton pour boissons sont constitués d'un couvercle en matière plastique et d'un corps d'emballage, **caractérisé par** les étapes suivantes :
- amenée d'un film plastifié sur un moule d'emboutissage profond présentant une tubulure filetée qui dépasse du corps d'outil ;
- emboutissage profond du film ;
- démoulage du couvercle embouti en profondeur après avoir dévissé la tubulure filetée hors du couvercle, par vissage dans le moule d'outil ; et
- découpage du couvercle et de l'ouverture de versement.

18. Procédé pour fabriquer un couvercle destiné à des emballages composites à base de carton pour boissons, dans lequel les emballages composites à base de carton pour boissons sont constitués d'un couvercle en matière plastique et d'un corps d'emballage, **caractérisé par** les étapes suivantes :
- amenée d'un film plastifié sur un tube et sur un moule d'emboutissage profond présentant un outil d'écartement ;
- écartement de l'outil d'écartement ;
- emboutissage profond du film sur les pas de vis de l'outil d'écartement écarté ;
- démoulage du couvercle embouti en profondeur après la rentrée de l'outil d'écartement qui moule les pas de vis ; et
- découpage du couvercle et de l'ouverture de versement.

19. Procédé selon la revendication 17 ou 18, **caractérisé en ce que** l'amenée du film plastifié sur le moule d'emboutissage profond et l'écartement de l'outil d'écartement à l'intérieur du tube ont lieu simultanément.

20. Procédé selon la revendication 17 ou 18, **caractérisé en ce que** le démoulage du couvercle embouti en profondeur et le découpage du couvercle et de l'ouverture de versement ont lieu simultanément.

21. Emballage composite à base de carton pour boissons, comprenant un couvercle selon l'une des revendications 1 à 10, **caractérisé en ce que** le corps d'emballage est constitué de matériau composite à base de carton/de matière plastique.

22. Emballage composite à base de carton pour boissons, comprenant un couvercle selon l'une des revendications 1 à 10, **caractérisé en ce que** le corps d'emballage est constitué de matériau composite à base de carton/de matière plastique/d'aluminium.

23. Emballage composite à base de carton pour boissons, comprenant un couvercle selon l'une des revendications 1 à 10, **caractérisé en ce que** le corps d'emballage est constitué d'une gaine en matériau composite à base de carton/de matière plastique et d'un fond, de préférence en matière plastique.

24. Emballage composite à base de carton pour boissons, comprenant un couvercle selon l'une des revendications 1 à 10, **caractérisé en ce que** le corps d'emballage est constitué d'une gaine en matériau composite à base de carton/de matière plastique/d'aluminium et d'un fond, de préférence en matière plastique.
